# EUROPEAN PATENT APPLICATION

(11) **EP 4 717 393 A1**
(43) Date of publication of application: **01.04.2026**
(21) Application number: 25186821.2
(22) Date of filing: 02.07.2025
(51) Int. Cl.: B23K 20/10, H01M 50/103, H01M 50/105, H01M 50/528, H01M 50/536

(54) **WELDING APPARATUS FOR MANUFACTURING SECONDARY BATTERY AND METHOD OF MANUFACTURING SECONDARY BATTERY**

(30) Priority: 25.09.2024 KR 20240129689
(71) Applicant: SAMSUNG SDI CO., LTD., Yongin-si, Gyeonggi-do 17084 (KR)
(72) Inventor: LEE, Hyosuk, 17084 Yongin-si, Gyeonggi-do (KR)
(74) Representative: Gulde & Partner

(57) **Abstract**

A welding apparatus for manufacturing a secondary battery includes an electrode tab welding tool configured to weld a plurality of electrode tabs formed on an electrode plate forming an electrode assembly to form an electrode tab welding portion and a strip conductor welding tool configured to weld a strip conductor to the welded electrode tab to form a strip conductor welding portion. The strip conductor to be electrically connected to an external terminal, and the strip conductor welding tool and the electrode tab welding tool being configured to form the strip conductor welding portion and the electrode tab welding portion in areas not overlapping each other.

## Description

### BACKGROUND

### 1. Field

Aspects of embodiments of the present disclosure relate to a welding apparatus for manufacturing a secondary battery and a method of manufacturing a secondary battery.

### 2. Description of Related Art

Batteries may be categorized as non-rechargeable (or primary) batteries and rechargeable (or secondary) batteries. Low-capacity batteries may be used in small, portable electronic devices, such as smartphones, feature phones, laptop computers, digital cameras, and camcorders, while large-capacity batteries are widely used as power sources for driving motors in hybrid electric vehicles, electric vehicles, and other vehicles, power storage batteries, and the like. A secondary battery generally includes an electrode assembly including (or composed of) a positive electrode and a negative electrode, an outer member, such as a case or can, accommodating the electrode assembly, an external terminal electrically connected to the electrode assembly, and the like.

The electrode assembly and the external terminal can be electrically connected by welding an electrode tab formed on the electrode assembly and a strip conductor. A plurality of electrode tabs can be formed on the electrode assembly, and in this case, the plurality of electrode tabs can be welded together, and the strip conductor can be welded to the welded electrode tabs. Ultrasonic welding can be used for welding the electrode tabs and for welding the electrode tabs and the strip conductor.

In such a welding method, an electrode tab welding portion and a strip conductor welding portion may overlap, resulting in double welding. Problems, such as cracking of the electrode plate, reduction in or insufficient welding strength, and the like may occur due to such overlap of the welding portions.

The above information disclosed in this Background section is for enhancement of understanding of the background of the present disclosure, and therefore, it may contain information that does not constitute a related (or prior) art.

### SUMMARY

Embodiments of the present disclosure are directed to a welding method that prevents double welding between an electrode tab welding portion and a strip conductor welding portion.

According to an embodiment of the present disclosure, a welding apparatus for manufacturing a secondary battery includes an electrode tab welding tool configured to weld a plurality of electrode tabs formed on an electrode plate forming an electrode assembly to form an electrode tab welding portion and a strip conductor welding tool configured to weld a strip conductor, to be electrically connected to an external terminal, to the welded electrode tab to form a strip conductor welding portion. The strip conductor welding tool and the electrode tab welding tool are configured to form the strip conductor welding portion and the electrode tab welding portion in areas not overlapping each other.

According to another embodiment of the present disclosure, a method of manufacturing a secondary battery includes welding a plurality of electrode tabs formed on the electrode plate of an electrode assembly to form an electrode tab welding portion and welding a strip conductor electrically to the welded electrode tab to form a strip conductor welding portion, the strip conductor to be connected to an external terminal. The electrode tab welding portion formed on the electrode tab and the strip conductor welding portion formed on the strip conductor are present in areas not overlapping each other.

According to another embodiment of the present disclosure, a secondary battery includes an electrode assembly comprising a plurality of electrode tabs welded together at an electrode tab welding portion and a strip conductor welded to the electrode tab at a strip conductor welding portion, the strip conductor to be electrically connected to an external terminal. The strip conductor welding portion and the electrode tab welding portion are formed in areas not overlapping each other.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIGS. 1 and 2 schematically illustrate an electrode assembly of a secondary battery;
FIG. 3 schematically illustrates a pouch-type secondary battery;
FIG. 4 is a detailed view of a welding portion of an electrode tab and a welding portion of a strip conductor of an electrode assembly according to some embodiments of the present disclosure;
FIG. 5 shows an electrode tab welding portion according to some embodiments of the present disclosure;
FIG. 6 illustrates an ultrasonic welding horn that may be used as a welding tool to form the electrode tab welding portion as shown in FIG. 5;
FIG. 7 shows a state in which the strip conductor is welded to the electrode tab on which electrode tab welding portions are formed as shown in FIG. 5 by using the welding tool shown in FIG. 6;
FIGS. 8A and 8B ultrasonic welding horns that may be used as a welding tool to form a strip conductor welding portion having the form shown in FIG. 7;
FIG. 9 shows electrode tab welding portions according to some other embodiments of the present disclosure;
FIG. 10 illustrates an ultrasonic welding horn for forming the electrode tab welding portions shown in FIG. 9;
FIG. 11 shows a state in which the strip conductor is welded to the electrode tab on which the electrode tab welding portions are formed;
FIG. 12 illustrates an ultrasonic welding horn for forming the strip conductor welding portion shown in FIG. 11;
FIG. 13 is a view of an electrode tab part of a secondary battery manufactured by an ultrasonic welding apparatus for manufacturing a secondary battery;
FIG. **14** is another view of the electrode tab part of the secondary battery manufactured by the ultrasonic welding apparatus for manufacturing a secondary battery;
FIGS. 15A to 15C are views describing conventional electrode tab welding and strip conductor welding; and
FIG. 16 schematically illustrates a prismatic secondary battery.

### DETAILED DESCRIPTION

Hereinafter, embodiments of the present disclosure will be described, in detail, with reference to the accompanying drawings. The terms or words used in the present specification and claims should not to narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

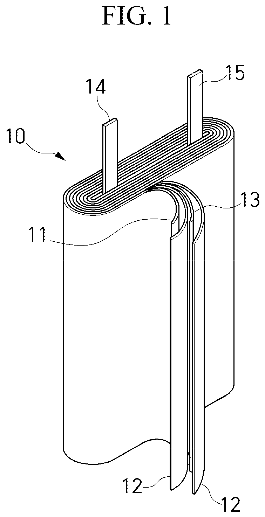

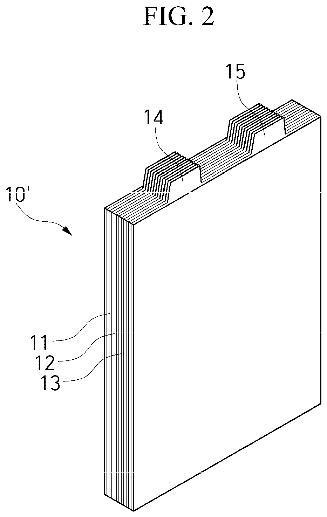

FIGS. 1 and 2 schematically show an electrode assembly of a secondary battery. FIG. 1 shows a winding-type electrode assembly, and FIG. 2 shows a stack-type electrode assembly.

Referring to FIG. 1, an electrode assembly 10 may be formed by winding or stacking a stack of a first electrode plate 11, a separator 12, and a second electrode plate 13, each of which are formed as thin plates or films. When the electrode assembly 10 is a wound stack, a winding axis may be parallel to a longitudinal direction of a case. Referring to FIG. 2, the electrode assembly 10' may be a stack type rather than the winding type as shown in FIG. 1. The shape or type of the electrode assembly is not limited in the present disclosure. In addition, the electrode assembly may be a Z-stack electrode assembly in which a positive electrode plate and a negative electrode plate are inserted into both sides (e.g., opposite sides) of a separator, which is then bent (or folded) into a Z-stack. In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminum or an aluminum alloy. The second electrode plate 13 may include a second electrode tab 15 (e.g., a second uncoated portion), which is a region to which the second electrode active material is not applied. The second electrode tab 15 may be connected to an external second terminal. In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

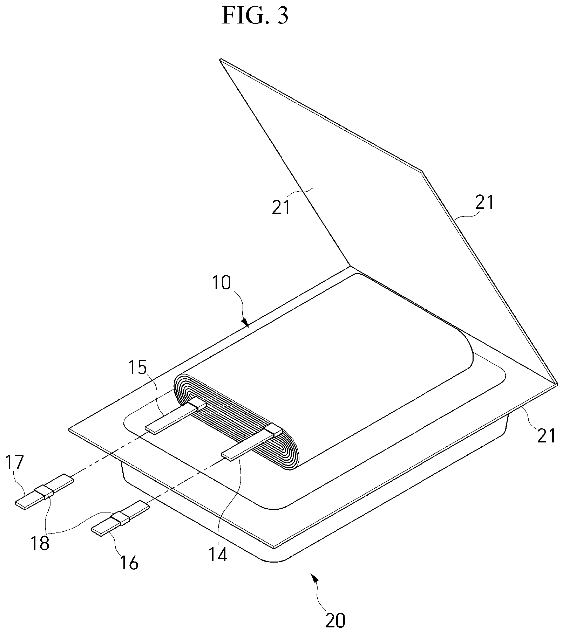

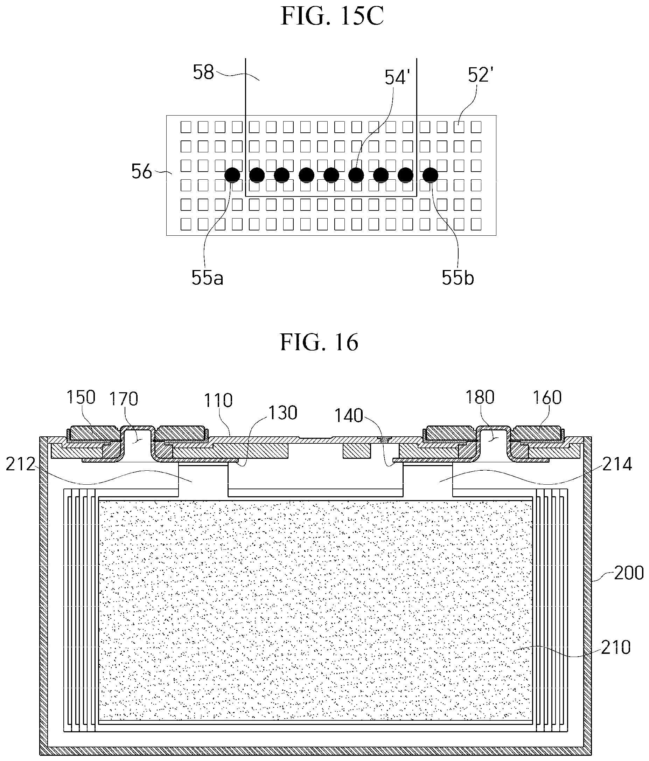

In some embodiments, the electrode assembly 10 may be accommodated in a case along with an electrolyte. In a pouch-type secondary battery, an electrode assembly 10 may be accommodated in a pouch made of flexible material (see, e.g., FIG. 3). In a cylindrical or prismatic secondary battery, an electrode assembly 10 may be accommodated in a cylindrical or prismatic metal casing (see, e.g., FIG. 16).

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x≤2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 3 schematically shows a pouch-type secondary battery according to some embodiments of the present disclosure.

The pouch-type secondary battery according to the present embodiment may include the electrode assembly 10 and a pouch 20 that accommodates the electrode assembly 10.

The first electrode tab 14 and the second electrode tab 15 of the electrode assembly 10 as shown in FIGS. 1 and 2 may be electrically connected by being joined to a first strip conductor 16 and a second strip conductor 17 that are exposed to the outside of the pouch 20 and act as terminals, respectively. A tab film 18 made of a polypropylene (PP) material for insulation from the pouch 20 may be attached to the first strip conductor 16 and the second strip conductor 17. Ultrasonic welding may be used to join the first electrode tab 14 and the first strip conductor 16 and to join the second electrode tab 15 and the second strip conductor 17.

Because electrical connection between an electrode plate of the electrode assembly and an externally exposed terminal is a basic configuration of the secondary battery, the welding of the electrode tab of the electrode assembly and the strip conductor (or a current collector) is not only applied to the pouch-type secondary battery shown in FIG. 3. For example, the above-described welding configuration may also be applied to the prismatic secondary battery shown in FIG. 16.

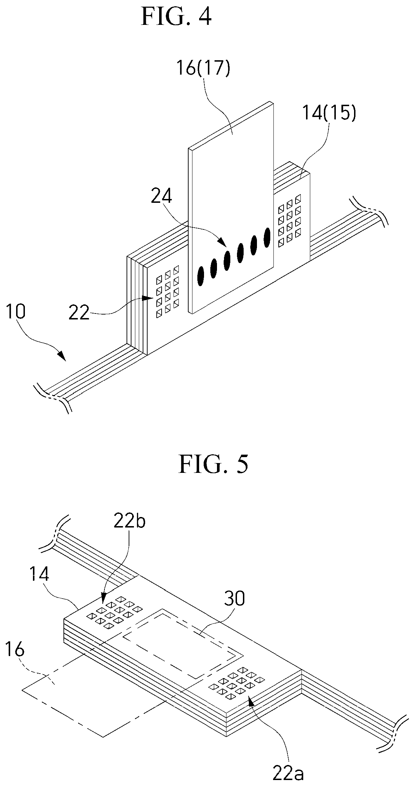

FIG. 4 is a detailed view of the welding portion of the electrode tab 14 or 15 and the welding portion of the strip conductor 16 or 17 of the electrode assembly 10 according to some embodiments of the present disclosure.

FIG. 4 shows a portion of the electrode assembly 10 (a so-called multi-tap structure) in which the plurality of electrode tabs 14 and 15 are formed. The area shown in FIG. 4 may be included in both the winding-type electrode assembly 10 shown in FIG. 1 and the stack-type electrode assembly 10' shown in FIG. 2.

As shown, the welding portion is largely classified into two portions, that is, an electrode tab welding portion 22 at where the plurality of electrode tabs 14 are welded, and a strip conductor welding portion 24 at where the strip conductor 16 is welded to the welded electrode tabs 14.

The electrode tab welding portion 22 and the strip conductor welding portion 24 are formed in areas that do not overlap each other. For example, the electrode tab welding portion 22 is formed outside an area occupied by the strip conductor 16, and the strip conductor welding portion 24 is formed in an area inside (or on) the strip conductor 16.

Although FIG. 4 shows the electrode tab welding portion 22 and the strip conductor welding portion 24 as having different welded marks (such as the shapes of the welding portions), this is merely for easy distinction between the two welding portions, and actually, the shapes of the welded portions (e.g., the weld marks) may be the same, similar, or completely different.

The electrode tab welding portion 22 and the strip conductor welding portion 24 may be formed by an ultrasonic welding tool using horns in which welding tips having shapes corresponding to these welding portions are formed.

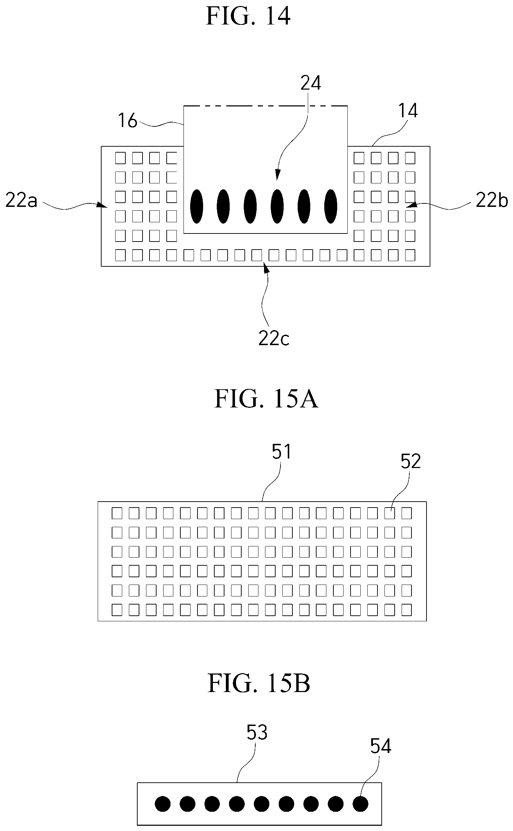

To describe embodiments of the present disclosure in comparison with the conventional welding method, a conventional electrode tab welding (referred to as pre-welding) and strip conductor welding (referred to as main welding) will be described with reference to FIGS. 15A to 15C. In the conventional ultrasonic pre-welding process, a pre welding horn 51 in which a welding tip 52 is formed to weld the entire surface of the electrode tab as shown in FIG. 15A is used, and a main welding horn 53 in which a welding tip 54 for welding the strip conductor is formed as shown in FIG. 15B is used to main-weld the strip conductor after the pre-welding. According to such a welding method, when a strip conductor 58 is main-welded after the electrode tab 56 is pre-welded, as shown in FIG. 15C, a strip conductor welding portion 54' overlaps an electrode tab welding portion 52' to form double welding (e.g., to form an area of overlapping welds). In addition, when the welding tip of the main welding horn goes beyond (or extends beyond) a strip conductor area in the main welding process, double welding may be formed in an electrode tab area at where no strip conductor is present (e.g., 55a or 55b). Due to such overlapping and double welding, welding quality problems, such as a high possibility of cracks in the welding portion, the occurrence of welding pinholes, and reduced welding strength, occur. In addition, the number of welding strokes may increase due to a step at side edge portions due to the thickness of the strip conductor 58, thereby increasing the wear on the horn and reducing the lifetime of the horn.

To avoid such overlap of the pre welding area and the main welding area, embodiments of the present disclosure are directed to an electrode tab-strip conductor welding method and a welding tool used for the same. According to the electrode tab-strip conductor welding method according to embodiments of the present disclosure, the pre welding portion, that is, the electrode tab welding portion 22 (see, e.g., FIG. 4) and the main welding portion, that is, the strip conductor welding portion 24 (see, e.g., FIG. 4) are welded separately. To this end, an electrode tab welding tool may be an ultrasonic welding horn designed to (or configured to) weld an area excluding the strip conductor area, and a strip conductor welding tool may be an ultrasonic welding horn designed to (or configured to) weld only the strip conductor area.

FIG. 5 shows the electrode tab welding portion 22 according to some embodiments of the present disclosure. Welding is performed on electrode tabs 14 formed on a plurality of electrode plates to form electrode tab welding portions 22a and 22b. The electrode tab welding portions 22a and 22b may be formed at positions that do not overlap (e.g., that are offset from) an area 30 at where the strip conductor 16 is to be welded later. In FIG. 5, the electrode tab welding portions 22a and 22b are formed in some areas outside a welding portion at where the strip conductor is to be welded, that is, in areas facing each other at both ends (e.g., at opposite ends) of the strip conductor 16 in a width direction, but the present disclosure is not limited thereto.

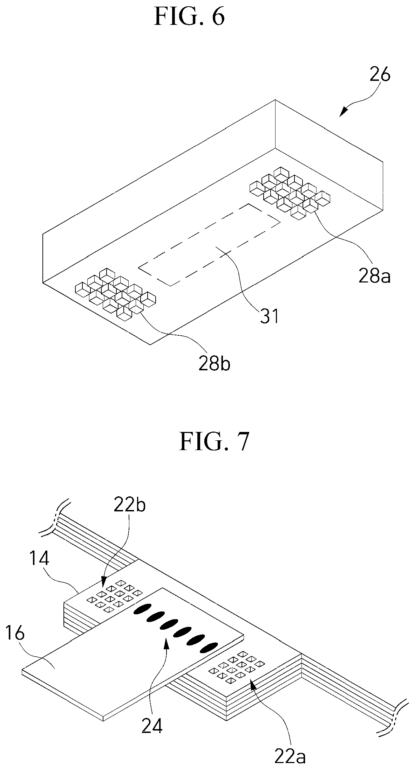

FIG. 6 illustrates an ultrasonic welding horn 26 that may be used as a welding tool to form the electrode tab welding portion 22 having the form shown in FIG. 5. The welding horn 26 for forming the electrode tab welding portion has welding tips 28a and 28b positioned in areas corresponding to the electrode tab welding portions 22a and 22b shown in FIG. 5. In addition, because an empty space 31 corresponding to the area 30 at where the strip conductor welding portion is to be formed later is present between the welding tips 28a of a first group and the welding tips 28b of a second group, the strip conductor welding portion 24 and the electrode tab welding portions 22a and 22b do not overlap each other later.

FIG. 7 shows a state in which the strip conductor 16 is welded to the electrode tab 14 on which electrode tab welding portions 22a and 22b are formed as shown in FIG. 5 by using the welding tool shown in FIG. 6. The strip conductor welding portion 24 formed by welding is present in the width direction of the strip conductor 16. As described above, the strip conductor welding portion 24 does not overlap the electrode tab welding portions 22a and 22b. Therefore, because there are no problems due to double welding and the strip conductor 16 may be welded on a clean surface (e.g., a surface without any welding portion) of the electrode tab 14, good welding strength may be ensured.

Referring to FIG. 7, the shape of the welding mark of the strip conductor welding portion 24 and the shape of the welding mark of the electrode tab welding portions 22a and 22b are shown differently for easy distinction, but in practice, may be similar or the same.

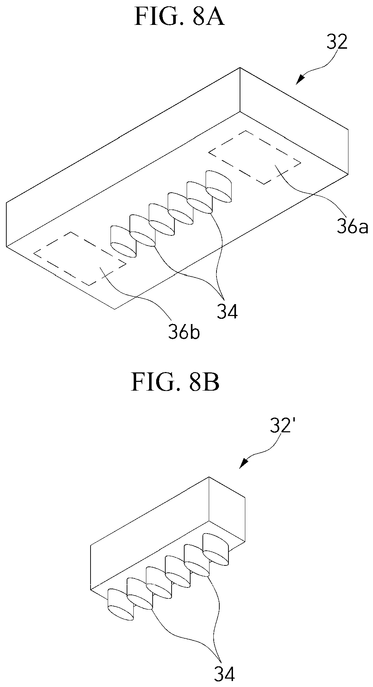

FIG. 8A illustrates an ultrasonic welding horn 32 according to an embodiment that may be used as a welding tool for forming the strip conductor welding portion 24 having the shape (or configuration) shown in FIG. 7. In the welding horn 32 for forming the strip conductor welding portion, a welding tip 34 is formed at a position corresponding to the strip conductor welding portion 24 shown in FIG. 7.

The welding tip 34 for forming the strip conductor welding portion 24 may be formed in an area (e.g., may have an area) smaller than the width of the strip conductor 16. Therefore, double welding with the electrode tab welding portions 22a and 22b may be prevented. In one embodiment, the welding tip 34 may be formed in an area (e.g., may be formed covering an area) in a range of about 70% to about 90% of the width of the strip conductor 16.

Empty welding avoidance portions 36a and 36b are positioned at both sides of the welding tip 34 forming the strip conductor welding portion 24 to prevent the overlap of welding at positions corresponding to the previously formed electrode tab welding portions 22a and 22b. In this way, double welding is prevented by avoiding the overlap of the pre welding area (e.g., the electrode tab welding portion 22) and the main welding area (e.g., the strip conductor welding portion 24), thereby avoiding welding quality problems, such as welding pinholes and reduced welding strength due to the occurrence of cracks.

FIG. 8B illustrates an ultrasonic welding horn 32' for welding a strip conductor according to another embodiment. The welding horn 32' itself may be manufactured (or may be formed) smaller than an outer boundary of the strip conductor 16. In the illustrated embodiment, only the welding tips 34 are formed, and no welding avoidance portions 36a and 36b, such as those shown in FIG. 8A, are formed. In this way, by manufacturing the strip conductor welding horn 32' smaller than the area of the strip conductor 16, wear to the strip conductor welding horn due to the step of the strip conductor 16 being higher than the surface of the electrode tab 14 due to the thickness of the strip conductor 16 may be prevented or reduced, thereby extending the period of use (e.g., the lifetime) of the horn.

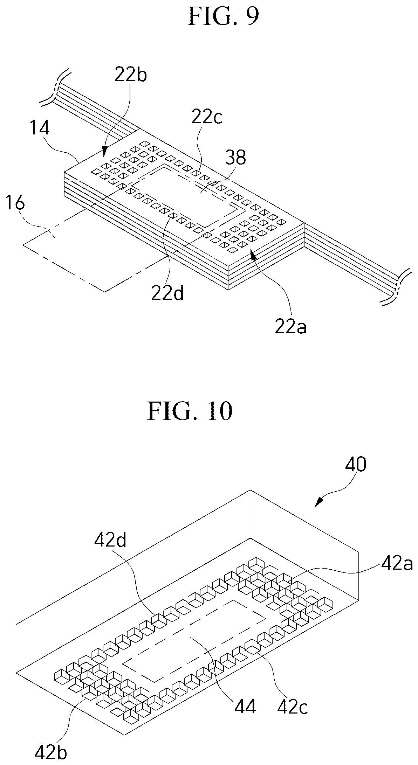

FIG. 9 shows electrode tab welding portions 22a to 22d according to some other embodiments of the present disclosure. Different from the embodiment shown in FIG. 5, the electrode tab welding portions 22a, 22b, 22c, and 22d closedly surround (e.g., extend around an entire periphery of) an area 38 at where the strip conductor 16 is welded later. However, the present disclosure is not limited thereto. For example, in other embodiments, the electrode tab welding portions do not closedly surround the area 38 at where the strip conductor 16 is welded but may surround (e.g., may extend around a portion of the periphery of) the same so that a portion (e.g., areas 22c or 22d) thereof is open (e.g., is not welded). In the embodiment illustrated in FIG. 9, the area of the electrode tab welding portion 22 may be expanded, thereby increasing the joining strength of the electrode tabs 14.

FIG. 10 illustrates an ultrasonic welding horn 40 that may be used as a welding tool to form the electrode tab welding portions 22a, 22b, 22c, and 22d having the form shown in FIG. 9. The welding horn 40 for forming the electrode tab welding portion has welding tips 42a, 42b, 42c, and 42d formed in the form of a closed circuit (e.g., in the shape of a closed loop) in areas corresponding to the electrode tab welding portions 22a, 22b, 22c, and 22d shown in FIG. 9. Because the insides of the welding tips 42a, 42b, 42c, and 42d form an empty space 44 corresponding to the area 38 at where the strip conductor welding portion is formed later, the strip conductor welding portion 24 and the electrode tab welding portions 22a, 22b, 22c, and 22d do not overlap each other.

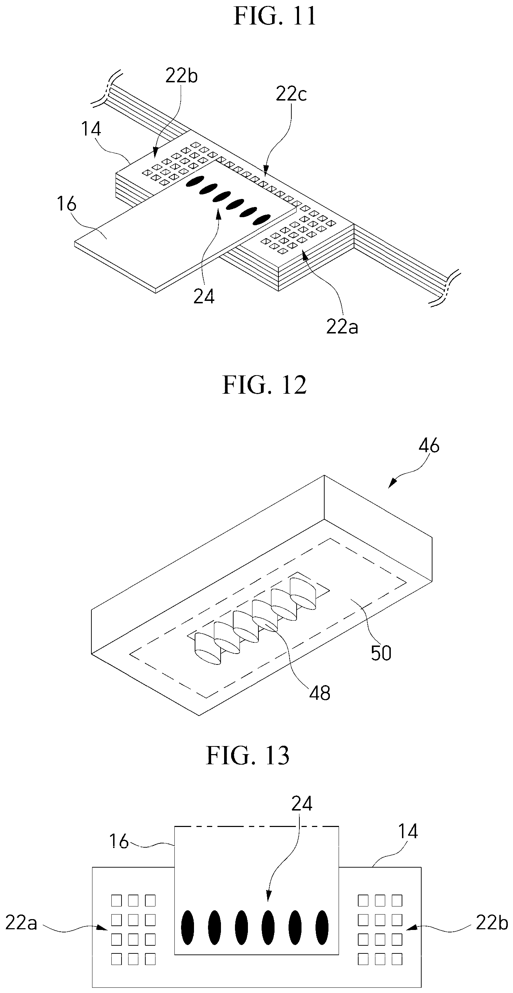

FIG. 11 shows a state in which the strip conductor 16 is welded to the electrode tab 14 on which the electrode tab welding portions 22a, 22b, 22c, and 22d are formed as shown in FIG. 9 by using the welding tool shown in FIG. 10. Referring to FIG. 11, the strip conductor welding portion 24 formed by welding is present in the width direction of the strip conductor 16. As described above, the strip conductor welding portion 24 does not overlap the electrode tab welding portions 22a, 22b, 22c, and 22d.

FIG. 12 illustrates an ultrasonic welding horn 46 according to an embodiment that may be used as a welding tool for forming the strip conductor welding portion 24 having the form (or configuration) shown in FIG. 11. In the welding horn 46 for forming the strip conductor welding portion, a welding tip 48 is formed at a position corresponding to the strip conductor welding portion 24 shown in FIG. 11. The welding tip 48 may be formed in an area (e.g., may have an area) smaller than the width of the strip conductor 16. Therefore, double welding with the electrode tab welding portions 22a, 22b, 22c, and 22d may be prevented. For that purpose, in one advantageous embodiment, the welding tip 48 may be formed in an area (e.g., may be formed over an area) of about 70% to about 90% of the width of the strip conductor 16.

An empty welding avoidance portion 50 is positioned near the welding tip 48 to prevent the overlap of welding at positions corresponding to the previously formed electrode tab welding portions 22a, 22b, 22c, and 22d.

In another embodiment, the strip conductor welding horn may be formed as the welding horn 32 shown in FIG. 8B.

FIG. 13 shows an example of a secondary battery manufactured by the above-described ultrasonic welding apparatus for manufacturing a secondary battery. FIG. 13 shows an electrode tab part of the secondary battery manufactured by the welding apparatus according to the embodiment described above with reference to FIGS. 5 to 8.

The electrode tab welding portions 22a and 22b formed by welding the plurality of electrode tabs 14 formed on a plurality of electrode plates forming the electrode assembly are present on the electrode tab 14, and the strip conductor 16 to be electrically connected to an external terminal is welded to the electrode tab 14. The strip conductor welding portion 24 formed by welding the electrode tab 14 is present on the strip conductor 16. The strip conductor welding portion 24 and the electrode tab welding portions 22a and 22b are formed in areas not overlapping each other (e.g., are offset with respect to each other).

In one embodiment, the strip conductor welding portion 24 may be present in an area (e.g., may have an area) smaller than the width of the strip conductor 16. For example, the strip conductor welding portion 24 may be present in an area in a range of about 70% to about 90% of the width of the strip conductor 16.

The electrode tab welding portions 22a and 22b may be present in some areas outside the strip conductor welding portion 24 (e.g., outside the boundary of the edge portions of both sides of the strip conductor 16 in the width direction of FIG. 13).

FIG. 14 shows an electrode tab part of the secondary battery manufactured by the welding apparatus according to the embodiment described above with reference to FIGS. 10 to 12.

Compared to the embodiment shown in FIG. 13, the electrode tab welding portions 22a, 22b, 22c, and 22d formed on the electrode tab 14 have expanded areas (e.g., cover greater area) and are formed to surround the periphery of (e.g., to extend around the periphery of) the strip conductor welding portion 24. As in the embodiment shown in FIG. 13, the strip conductor welding portion 24 and the electrode tab welding portions 22a, 22b, 22c, and 22d are formed in areas not overlapping each other (e.g., offset with respect to each other) to prevent double welding.

For example, the strip conductor welding portion 24 may be present in an area smaller than the width of the strip conductor 16. In one embodiment, the strip conductor welding portion 24 may be present in an area in a range of about 70% to about 90% of the width of the strip conductor 16.

In addition, as shown in FIG. 14, the electrode tab welding portions 22a, 22b, 22c, and 22d may be present in an area that closedly surrounds (e.g., extends around an entire periphery of) the strip conductor welding portion 24. In another embodiment, the electrode tab welding portions 22a, 22b, 22c, and 22d may be present in an area that partially surrounds (e.g., extends around a portion of the periphery of) the strip conductor welding portion 24 with some openings.

Hereinafter, a method of manufacturing a secondary battery according to some embodiments of the present disclosure will be described. The following description of the method will be primarily made with reference to an electrode tab-strip conductor welding process performed by the welding apparatus as described in the above embodiments.

The method of manufacturing a secondary battery according to some embodiments of the present disclosure includes providing an electrode assembly including a plurality of electrode plates on which an electrode tab is formed, welding a plurality of electrode tabs formed on the electrode plates of the electrode assembly to form an electrode tab welding portion, and welding the welded electrode tab to a strip conductor to be electrically connected to an external terminal to form a strip conductor welding portion.

According to embodiments of the present disclosure, the electrode tab welding portion formed on the electrode tab and the strip conductor welding portion formed on the strip conductor are present in areas not overlapping each other.

In some embodiments, the electrode tab welding portion and the strip conductor welding portion may be formed by ultrasonic welding.

In some embodiments, the strip conductor welding portion may be formed in an area smaller than the width of the strip conductor, and in one embodiment, the strip conductor welding portion may be formed in an area in a range of about 70% to about 90% of the width of the strip conductor.

In some embodiments, the electrode tab welding portion may be formed in some areas outside the strip conductor welding portion. In some other embodiments, the electrode tab welding portion may be formed in an area that closedly surrounds (e.g., that extends around an entire periphery of) the strip conductor welding portion, and in some other embodiments, the electrode tab welding portion may be formed in an area that partially surrounds (e.g., extends around a portion of the periphery of) the strip conductor welding portion.

The ultrasonic welding apparatus for manufacturing a secondary battery and the method of manufacturing a secondary battery according to the above-described embodiments of the present disclosure may also be applied to an electrode assembly used in other types of secondary batteries (e.g., prismatic secondary batteries) other than the pouch-type battery shown in FIG. 3.

FIG. 16 schematically shows a prismatic secondary battery.

An electrode assembly 210 may be formed by winding or stacking a stack of a first electrode plate, a separator, and a second electrode plate, which are formed as thin plates or films. When the electrode assembly 210 is a wound stack, a winding axis may be parallel to a longitudinal direction of the case 200. In some other embodiments, the electrode assembly 210 is a stack type rather than a winding type, but the shape of the electrode assembly 210 is not limited in the present disclosure. In addition, the electrode assembly 210 may be a Z-stack electrode assembly in which a positive electrode plate and a negative electrode plate are inserted into both sides (e.g., opposite sides) of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 212 (e.g., a first uncoated portion) that is a region to which the first electrode active material is not applied. The first electrode tab 212 may act as a current flow path between the first electrode plate and the first current collector 130. In some embodiments, when the first electrode plate is manufactured, the first electrode tab 212 is formed by being cut in advance to protrude to one side of the electrode assembly 210, or the first electrode tab 212 protrudes to one side of the electrode assembly 210 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 214 (e.g., a second uncoated portion) that is a region to which the second electrode active material is not applied. The second electrode tab 214 may act as a current flow path between the second electrode plate and a second current collector 140. In some embodiments, the second electrode tab 214 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 210 is accommodated in the case 200 along with an electrolyte.

In the electrode assembly 210, the first electrode tab 212 and the second electrode tab 214 protruding from the first electrode plate and the second electrode plate may be connected to the first current collector 130 and the second current collector 140, respectively. In some embodiments in which the first electrode tab 212 and the second electrode tab 214 are positioned at both ends of the electrode assembly 210, the first collector plate and the second collector plate will be positioned across the both ends and the upper portion of the electrode assembly 210.

The first current collector 130 and the second current collector 140 may be electrically connected to the first terminal 150 and the second terminal 160, respectively, and the conductive bosses 170, 180.

As described above, the secondary battery illustrated in FIG. 16 is a secondary battery having a top-tab structure in which the electrode assembly 210 is arranged so that the first electrode tab 212 and the second electrode tab 214 are positioned at the upper portion of the electrode assembly 210. In addition, because the first terminal 150 and the second terminal 160 are positioned at the upper portion of the case 200, it is referred to as a top-terminal structure. For example, the first electrode tab 212 and the second electrode tab 214 of the electrode assembly 210 are positioned at the upper portion within the case 200, and the first current collector 130 and the second current collector 140 are respectively connected thereto, and the first terminal 150 and the second terminal 160 connected to each current collector 130, 140 are installed on (e.g., protrude to) the outside of the cap plate 110.

According to the present disclosure, by avoiding an area in which a pre welding area (e.g., an electrode tab welding portion) and a main welding area (e.g., a strip conductor welding portion) overlap, double welding is prevented, thereby avoiding welding quality problems, such as welding pinholes and reduced welding strength due to the occurrence of cracks.

In addition, because a strip conductor may be welded to a clean surface of an electrode tab (e.g., an area without any welding portion), good welding strength is ensured and wear of a strip conductor welding horn due to a thickness step of the strip conductor higher than a surface of the electrode tab is reduced, thereby extending a period of use of (e.g., a lifespan of) the welding horn.

Although the present disclosure has been described above with respect to embodiments thereof, the present disclosure is not limited thereto. Various modifications and variations can be made thereto by those skilled in the art within the scope of the present disclosure as defined by the appended claims and their equivalents.

## Claims

1. A welding apparatus for manufacturing a secondary battery, the welding apparatus comprising:
an electrode tab (14, 15, 56) welding tool configured to weld a plurality of electrode tabs (14, 15, 56) formed on an electrode plate of an electrode assembly (10, 10', 210) to form an electrode tab welding portion (22, 22a, 22b, 22c, 22d, 52'); and
a strip conductor (58) welding tool configured to weld a strip conductor (58) to the welded electrode tab (14, 15, 56) to form a strip conductor welding portion (24, 54'), the strip conductor (58) to be electrically connected to an external terminal,
wherein the strip conductor (58) welding tool and the electrode tab (14, 15, 56) welding tool are configured to form the strip conductor welding portion (24, 54') and the electrode tab welding portion (22, 22a, 22b, 22c, 22d, 52') in areas (22c, 30, 38) not overlapping each other.

2. The welding apparatus as claimed in claim 1, wherein the electrode tab (14, 15, 56) welding tool comprises a horn having a welding tip (28a, 28b, 34, 42a, 42b, 42c, 42d, 48, 52, 54) for ultrasonic-welding the plurality of electrode tabs (14, 15, 56), and
wherein the strip conductor (58) welding tool comprises a horn having a welding tip (28a, 28b, 34, 42a, 42b, 42c, 42d, 48, 52, 54) for ultrasonic-welding the strip conductor (58) to the welded electrode tab (14, 15, 56).

3. The welding apparatus as claimed in claim 1 or 2, wherein the strip conductor (58) welding tool is configured so that the strip conductor welding portion (24, 54') is formed having an area (22c, 30, 38) smaller than a width of the strip conductor (58).

4. The welding apparatus as claimed in claims 1 to 3, wherein the electrode tab (14, 15, 56) welding tool is configured so that the electrode tab welding portion (22, 22a, 22b, 22c, 22d, 52') is formed in areas (22c, 30, 38) outside the strip conductor welding portion (24, 54').

5. The welding apparatus as claimed in claims 1 to **4,** wherein the electrode tab (14, 15, 56) welding tool is configured so that the electrode tab welding portion (22, 22a, 22b, 22c, 22d, 52') is formed in any one of an area (22c, 30, 38) that extends entirely around a periphery of the strip conductor welding portion (24, 54') and an area (22c, 30, 38) that extends partially around a periphery of the strip conductor welding portion (24, 54').

6. A method of manufacturing a secondary battery, the method comprising:
welding a plurality of electrode tabs (14, 15, 56) formed on an electrode plate of an electrode assembly (10, 10', 210) to form an electrode tab welding portion (22, 22a, 22b, 22c, 22d, 52'); and
welding a strip conductor (58) to be electrically connected to an external terminal to the welded electrode tab (14, 15, 56) to form a strip conductor welding portion (24, 54'),
wherein the electrode tab welding portion (22, 22a, 22b, 22c, 22d, 52') formed on the electrode tab (14, 15, 56) and the strip conductor welding portion (24, 54') formed on the strip conductor (58) are present in areas (22c, 30, 38) not overlapping each other.

7. The method as claimed in claim 6, wherein the electrode tab welding portion (22, 22a, 22b, 22c, 22d, 52') and the strip conductor welding portion (24, 54') are formed by ultrasonic welding.

8. The method as claimed in claim 6 or 7, wherein the strip conductor welding portion (24, 54') is formed having an area (22c, 30, 38) smaller than a width of the strip conductor (58).

9. The method as claimed in claims 6 to 8, wherein the electrode tab welding portion (22, 22a, 22b, 22c, 22d, 52') is formed in areas (22c, 30, 38) outside the strip conductor welding portion (24, 54').

10. The method as claimed in claims 6 to 9, wherein the electrode tab welding portion (22, 22a, 22b, 22c, 22d, 52') is formed in any one of an area (22c, 30, 38) that extends around an entire periphery of the strip conductor welding portion (24, 54') and an area (22c, 30, 38) that extends partially around a periphery of the strip conductor welding portion (24, 54').

11. A secondary battery comprising:
an electrode assembly (10, 10', 210) comprising a plurality of electrode tabs (14, 15, 56) welded together at an electrode tab welding portion (22, 22a, 22b, 22c, 22d, 52'); and
a strip conductor (58) welded to the electrode tab (14, 15, 56) at a strip conductor welding portion (24, 54'), the strip conductor (58) configured to be electrically connected to an external terminal,
wherein the strip conductor welding portion (24, 54') and the electrode tab welding portion (22, 22a, 22b, 22c, 22d, 52') are formed in areas (22c, 30, 38) not overlapping each other.

12. The secondary battery as claimed in claim 11, wherein the strip conductor welding portion (24, 54') is present in an area (22c, 30, 38) smaller than a width of the strip conductor (58).

13. The secondary battery as claimed in claim 11 or 12, wherein the strip conductor welding portion (24, 54') is present having an area (22c, 30, 38) in a range of 70% to 90% of a width of the strip conductor (58).

14. The secondary battery as claimed in claims 11 to 13, wherein the electrode tab welding portion (22, 22a, 22b, 22c, 22d, 52') is present in areas (22c, 30, 38) outside the strip conductor welding portion (24, 54').

15. The secondary battery as claimed in claims 11 to **14,** wherein the electrode tab welding portion (22, 22a, 22b, 22c, 22d, 52') is present in any one of an area (22c, 30, 38) that extends entirely around a periphery of the strip conductor welding portion (24, 54') and an area (22c, 30, 38) that partially extends around a periphery of the strip conductor welding portion (24, 54').
